# EUROPÄISCHE PATENTANMELDUNG

(11) **EP 2 407 680 A1**
(43) Veröffentlichungstag der Anmeldung: **18.01.2012**
(21) Anmeldenummer: 10007239.6
(22) Anmeldetag: 14.07.2010
(51) Int. Cl.: F16D 1/092, F16D 1/08

(54) **Welle für eine Strömungsmaschine**

(71) Anmelder: Siemens Aktiengesellschaft, 80333 München (DE)
(72) Erfinder: Bison, Patrick, 45470 Mülheim an der Ruhr (DE); Deister, Patrick, 47877 Willich (DE); Dettmar, Diethelm, 46485 Wesel (DE); Heinrichs, Elmar, 41844 Wegberg (DE); Paul, Traugott, 46282 Dorsten (DE); Strobach, Daniel, 47608 Geldern (DE); Thamm, Norbert, 45133 Essen (DE)

(57) **Zusammenfassung**

Die Erfindung betrifft eine Anordnung (1) umfassend eine Welle (2) und eine auf der Welle (2) angeordnete Kupplung, wobei die Berührungsfläche (8) zwischen dem Innenradius der Kupplung und der äußeren Fläche der Welle (2) geneigt gegenüber der Rotationsachse (5) ausgebildet ist, um ein axiales Verschieben des Rotationskörpers (4) zu verhindern.

## Beschreibung

Die Erfindung betrifft eine Anordnung umfassend eine Welle mit einem rotationssymmetrischen Wellenabschnitt und einem Rotationskörper, der zum Aufschrumpfen auf den rotationssymmetrischen Wellenabschnitt ausgebildet ist, wobei zwischen dem Rotationskörper und dem rotationssymmetrischen Wellenabschnitt im Querschnitt entlang der Rotationsachse gesehen eine Kontaktgerade gebildet ist. Des Weiteren betrifft die Erfindung ein Verfahren zum Aufbringen eines Rotationskörpers auf eine Welle, wobei der Rotationskörper erhitzt und auf die Welle aufgeschrumpft wird.

In Strömungsmaschinen, wie z. B. in Dampfturbinen, rotiert eine mit Laufschaufeln ausgebildete Welle um eine Rotationsachse innerhalb eines mit Leitschaufeln ausgebildeten Innengehäuses. Die Dampfparameter wie Druck und Temperatur des Dampfes, der in die Dampfturbine strömt, kann unterschiedliche Werte annehmen. In der Regel weist der Frischdampf, das ist der Dampf, der direkt vom Dampferzeuger kommt, die höchste Temperatur und den höchsten Druck. Nach Durchströmen der Dampfturbine weist der Dampf einen niedrigeren Druck und eine niedrigere Temperatur auf. Die Dampfturbinen werden in sogenannte Teil-Turbinen aufgeteilt, die jede für sich ein Außengehäuse sowie eine im Außengehäuse drehgelagerte Welle aufweist. Je nach Dampfparameter werden diese Teilturbinen in Hochdruck-, Mitteldruck- und Niederdruck-Teilturbinen eingeteilt. Die Einteilung in Hochdruck-, Mitteldruck- und Niederdruck-Teilturbinen wird in der Fachwelt nicht einheitlich nach den Dampfparametern vorgenommen.

Es ist üblich, die Wellen für die Hochdruck- und Mitteldruck-Teilturbinen massiv auszubilden und in diese Wellen Nuten anzuordnen, die geeignet sind, die Laufschaufeln aufzunehmen. Es ist bekannt, Niederdruckwellen derart auszubilden, dass Radscheiben auf diese Wellen aufgeschrumpft werden und diese Radscheiben Nuten zur Aufnahme von Niederdruck-Laufschaufeln aufweisen. Der Innendurchmesser dieser Radscheiben muss folgerichtig geringfügig geringer sein als der maximale Außendurchmesser des Wellenendes bei Raumtemperatur.

Ebenso wie die Radscheiben werden Kupplungen, die eine mechanische Kopplung zwischen der Niederdruck-Teilturbinenwelle und beispielsweise einen elektrischen Generator darstellen, aufgeschrumpft. Diese Kupplungen müssen zur optimalen Übertragung der Drehmomente am Wellenende angeordnet werden. Die Anforderungen an die heutigen Dampfturbinen fordern eine entsprechende Kupplungsgröße, um Leistungsmomente und Störfallmomente sicher übertragen zu können. Daher liegt der erforderliche Außendurchmesser der Kupplung in der Regel oberhalb des durch den Radscheiben-Schrumpfsitz definierten Maximaldurchmessers. Des Weiteren muss die Kupplung den Forderungen nach der Übertragbarkeit von axialen Erdbebenlasten genügen sowie der Übertragung von signifikanten Biegemomenten durch eine Fehlausrichtung des Turbinenstranges.

Die Kupplung für eine Niederdruck-Teilturbine umfasst eine auf das Ende der Welle aufgeschrumpfte, abgesetzte Ringscheibe. In der Regel handelt es sich hier um einen zylindrischen Pressverband mit geringem Übermaß. Um ein axiales Verschieben der Ringscheibe zu verhindern, wird in der Regel ein Anschlag in einer Richtung, die vom Wellenende wegzeigt, angeordnet. Ein Verschieben dieser Radscheibe in die andere Richtung wird in der Regel durch Kegelstifte verhindert. Diese Kegelstifte haben des Weiteren die Aufgabe, auftretende Torsionsmomente zu übertragen. Die Kegelstifte sind allerdings nicht geeignet, signifikant großen axialen Lasten standzuhalten. Daher besteht die Gefahr, dass die Kupplung axial von der Welle abgezogen wird. Dies soll durch die Erfindung verhindert werden.

Daher ist Aufgabe der Erfindung, eine Anordnung umfassend eine Welle sowie ein Verfahren anzugeben, bei dem es möglich ist, ein axiales Verschieben eines Rotationskörpers wie z. B. einer Kupplung zu verhindern.

Gelöst wird diese Aufgabe durch eine Anordnung umfassend eine Welle mit einem rotationssymmetrischen Wellenabschnitt und einem Rotationskörper, der zum Aufschrumpfen auf den rotationssymmetrischen Wellenabschnitt ausgebildet ist, wobei zwischen dem Rotationskörper und dem rotationssymmetrischen Wellenabschnitt im Querschnitt entlang der Rotationsachse gesehen eine Kontaktgerade gebildet ist, wobei die erste Kontaktgerade gegenüber der Rotationsachse geneigt ist.

Die auf das Verfahren hin gerichtete Aufgabe wird gelöst durch ein Verfahren zum Aufbringen eines Rotationskörpers auf eine Welle, wobei der Rotationskörper erhitzt und auf die Welle aufgeschrumpft wird, wobei eine erste Berührungsfläche zwischen dem Rotationskörper und der Welle gegenüber der Rotationsachse geneigt ausgebildet wird.

Mit der Erfindung wird somit der Weg eingeschlagen, die üblicherweise planar, d. h. parallel zur Rotationsachse ausgebildete Wellenoberfläche, auf die ein Rotationskörper aufgeschrumpft wird, geneigt auszubilden. Durch eine entsprechende Vorfertigung der Welle und des Rotationskörpers mit entsprechenden geneigten Flächen entsteht somit eine Kraftkomponente, die im Falle eines axialen Verschiebens des Rotationskörpers aufgebaut wird, was zu einer Gegenkraft führt und dem axialen Verschieben entgegenwirkt. Somit wird ein Abziehen des Rotationskörpers von der Welle wirksam verhindert. Die Neigung der ersten Kontaktgeraden ist hierbei derart, dass vom Wellenende weg entlang gesehen der Radius des Wellenendes geringer wird. Das bedeutet im Umkehrschluss, dass der Radius zum Wellenende hin größer wird. Der Rotationskörper weist eine entsprechende Neigung auf, die derart ist, dass zum Wellenende hin der Radius, in Bezug auf den Rotationskörper, größer wird.

Die Kontaktgerade ist hierbei eine konstruierte bzw. gedachte Gerade, die sichtbar wird, wenn ein Querschnitt der Anordnung entlang der Rotationsachse gebildet wird. Die Kontaktgerade bildet sich hierbei zwischen dem Innenradius des Rotationskörpers und der Welle aus.

Vorteilhafte Weiterbildungen sind in den Unteransprüchen angegeben.

So wird in einer ersten vorteilhaften Weiterbildung der Rotationskörper als Kupplung ausgebildet und an einem Wellenende der Welle angeordnet. Unter Kupplung ist im weiten Sinne eine Ringscheibe zu verstehen, die an eine weitere Kupplung angeordnet werden kann, um Drehmomente geeignet zu übertragen. Im einfachsten Falle kann diese Kupplung eine Ringscheibe mit Bohrungen sein, durch die Stifte angeordnet werden und letztendlich ein Drehmoment über die stifte übertragen wird.

In einer vorteilhaften Weiterbildung grenzt der Rotationskörper an einem als Anschlag ausgebildeten Vorsprung auf der Welle an, wobei der Anschlag zur axialen Sicherung des Rotationskörpers ausgebildet ist. Einerseits wird der Rotationskörper gegen ein Verschieben zum Wellenende hin durch die geneigte Kontaktgerade verhindert und andererseits wird ein Verschieben des Rotationskörpers in die andere Richtung durch einen Anschlag, der als Vorsprung auf der Welle ausgebildet wird, wirksam verhindert. Solch ein Vorsprung ist in der Regel vergleichsweise einfach zu fertigen.

In einer weiteren vorteilhaften Weiterbildung ist zwischen der ersten Kontaktgeraden und der Rotationsachse ein Winkel α gebildet, der Werte zwischen 0° bis 20°, 5° bis 20°, 10° bis 20°, 15° bis 20°, 1° bis 15°, 1° bis 10°, 1° bis 5°, 5° bis 15° oder 0° bis 1° annimmt. Diese Werte haben sich als besonders vorteilhaft erwiesen, um ein wirksames Verschieben der Kupplung zu verhindern.

In einer weiteren vorteilhaften Weiterbildung ist eine zweite Kontaktgerade in axialer Richtung gesehen hinter der ersten Kontaktgeraden ausgebildet und unter einem Winkel β gegenüber der Rotationsachse geneigt, wobei die Pfeilung der ersten Kontaktgeraden gegenüber der zweiten Kontaktgeraden alterniert. Unter einer Pfeilung ist im Wesentlichen ein Drehen in oder entgegen des Uhrzeigersinns zu verstehen. Das bedeutet, dass die erste Kontaktgerade im Uhrzeigersinn gedreht ist und die zweite Kontaktgerade entgegen dem Uhrzeigersinn gedreht ist.

Ein axiales Verschieben des Rotationskörpers sowohl in die eine als auch in die andere Richtung wird dadurch verhindert, dass die Flächen zwischen der Welle und dem Rotationskörper alternierend geneigt sind. Darunter ist zu verstehen, dass zunächst vom Wellenende weg der Radius des Wellenendes geringer wird. Entsprechend wird der Innenradius des Rotationskörpers ebenso geringer. Ab einem Innenradiusminimum, der im Wesentlichen in der Mitte des Rotationskörpers liegen könnte, steigt der Innenradius vom Wellenende weg wieder an. Im Querschnitt gesehen ähnelt die Anordnung der ersten Kontaktgeraden und der zweiten Kontaktgeraden einem sehr flachen V.

In einer vorteilhaften Weiterbildung weist der Winkel β Werte zwischen 0° bis 20°, 5° bis 20°, 10° bis 20°, 15° bis 20°, 0° bis 15°, 0° bis 10°, 0° bis 5°, 5° bis 15° oder 0° bis 1° auf.

Vorteilhafterweise weist der Winkel α denselben Wert auf wie der Winkel β.

Ebenso vorteilhaft ist es, wenn die erste Kontaktgerade direkt an der zweiten Kontaktgeraden anschließt. Dies lässt sich besonders einfach herstellen.

In dem erfindungsgemäßen Verfahren zum Aufbringen eines Rotationskörpers auf eine Welle wird erfindungsgemäß der Rotationskörper erhitzt und auf die Welle aufgeschrumpft, wobei eine erste Berührungsfläche zwischen dem Rotationskörper und der Welle gegenüber der Rotationsachse geneigt ausgebildet wird. Die Berührungsfläche kann hierbei eine lineare Erstreckung aufweisen, d. h., dass im Querschnitt gesehen eine Kontaktgerade ausgebildet ist.

In einer vorteilhaften Weiterbildung des Verfahrens wird eine zweite Berührungsfläche zwischen dem Rotationskörper und der Welle in axialer Richtung dahinter ausgebildet, wobei die zweite Berührungsfläche gegenüber der ersten Berührungsfläche alternierend gepfeilt und gegenüber der Rotationsachse geneigt ausgebildet wird. Ähnlich wie bei der Anordnung wird somit der Radius vom Wellenende weg gesehen zunächst geringer und anschließend im Bereich der zweiten Berührungsfläche wieder größer. Dadurch wird ein Verschieben des Rotationskörpers sowohl in die eine als auch in die andere Richtung wirksam verhindert.

Die Erfindung wird anhand eines Ausführungsbeispiels näher erläutert. Dabei haben Komponenten mit denselben Bezugszeichen im Wesentlichen dieselbe Funktionsweise.

Es zeigen:
- Figur 1: eine Querschnittsansicht einer erfindungsgemäßen Anordnung mit einem Anschlag;
- Figur 2: eine zweite Ausführungsform der Anordnung im Querschnitt gesehen ohne Anschlag.

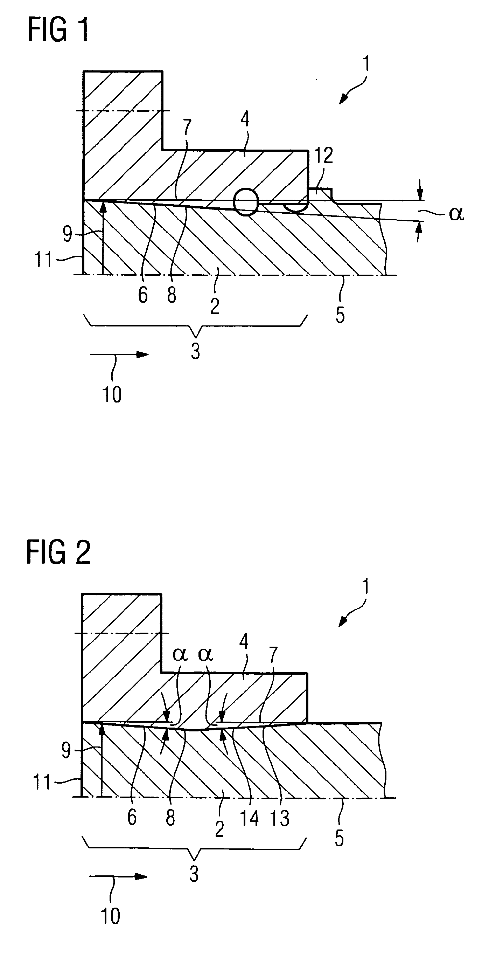

Die Figur 1 zeigt eine erfindungsgemäße Anordnung umfassend eine Welle 2 mit einem ersten rotationssymmetrischen Wellenabschnitt 3 und einem Rotationskörper 4. Die Welle 2 sowie der Rotationskörper 4 sind im Wesentlichen rotationssymmetrisch zu einer Rotationsachse 5 ausgebildet. Der Rotationskörper 4 ist zum Aufschrumpfen auf den rotationssymmetrischen Wellenabschnitt 3 ausgebildet, wobei zwischen dem Rotationskörper 4 und dem rotationssymmetrischen Wellenabschnitt 3 im Querschnitt entlang der Rotationsachse 5 gesehen eine Kontaktgerade 6 ausgebildet ist, die gegenüber der Rotationsachse 5 geneigt ist. In der Figur 1 ist eine Hilfslinie 7 eingezeichnet, die parallel zu der Rotationsachse 5 verschoben ist. Zwischen dieser Hilfslinie 7 und der ersten Kontaktgeraden 6 ist ein Winkel α gebildet. Das bedeutet, dass zwischen einer ersten Berührungsfläche 8, die zwischen der Welle 2 und dem Rotationskörper 4 gebildet ist, eine Neigung ausgebildet ist. Diese Neigung ist derart, dass ein Radius 9 in axialer Richtung 10, geringer wird. Der Winkel α kann hierbei Werte zwischen 0° bis 20°, 5° bis 20°, 10° bis 20°, 15° bis 20°, 0° bis 15°, 0° bis 10°, 0° bis 5°, 5° bis 15° oder 0° bis 1° annehmen.

Der Rotationskörper 4 ist hierbei als eine Kupplung ausgebildet und daher am Wellenende 11 angeordnet. Über nicht näher dargestellte Bohrungen können nicht näher dargestellte Stifte angeordnet werden und mit einem anderen Wellenabschnitt drehmomentübertragend gekoppelt werden.

Ein axiales Verschieben entgegen der axialen Richtung 10 ist durch die geneigte erste Kontaktgerade 6 verhindert, da eine Kraft entgegen der axialen Richtung 10 in der axialen Richtung 10 entgegenwirkt. Damit der Rotationskörper 4 nicht in der axialen Richtung 10 verschoben werden kann, wird ein Vorsprung 12 als Anschlag ausgebildet, an dem der Rotationskörper 4 anliegt. Der Rotationskörper 4 wird während eines Aufschrumpfvorgangs erhitzt und auf die Welle 2 aufgeschrumpft, wobei die erste Berührungsfläche 8 zwischen dem Rotationskörper 4 und der Welle 2 gegenüber der Rotationsachse 5 geneigt ausgebildet wird. Der Anschlag, der als Vorsprung 12 ausgebildet ist, verhindert hierbei ein Verrutschen des Rotationskörpers 4 in axialer Richtung 10.

Die Figur 2 zeigt eine alternative Ausführungsform der Anordnung 1 umfassend eine Welle 2 mit einem rotationssymmetrischen Wellenabschnitt 3 und einem Rotationskörper 4. Der Unterschied zu der Ausführungsform gemäß Figur 1 besteht im Wesentlichen darin, dass die Welle 2 nunmehr keinen Vorsprung 12 aufweist, der ein axiales Verschieben in axialer Richtung 10 verhindert. Vielmehr wird der Vorsprung 12 durch eine zweite Kontaktgerade 13 ersetzt. Diese zweite Kontaktgerade 13 entsteht dadurch, dass im Querschnitt gesehen die Berührungspunkte zwischen dem Rotationskörper 4 und der Welle 2 geneigt ausgebildet ist. Die zweite Kontaktgerade 13 ist hierbei in axialer Richtung 10 hinter der ersten Kontaktgeraden 6 angeordnet. Der Winkel zwischen der zweiten Kontaktgeraden 13 und der Rotationsachse 5 wird mit β bezeichnet und weist Werte zwischen 0° bis 20°, 5° bis 20°, 10° bis 20°, 15° bis 20°, 0° bis 15°, 0° bis 10°, 0° bis 5°, 5° bis 15° oder 0° bis 1° auf. In einer besonderen Ausführungsform ist der Winkel α mit dem Winkel β im Wesentlichen identisch. Ebenso ist die erste Kontaktgerade 6 in einer besonderen Ausführungsform direkt an der zweiten Kontaktgeraden 13 angeordnet.

Die somit gewonnenen Ausführungsformen lassen sich einfach fertigen und verhindern ein Verschieben des Rotationskörpers sowohl in axialer Richtung als auch entgegen der axialen Richtung 10.

## Patentansprüche

1. Anordnung (1) umfassend eine Welle (2) mit einem rotationssymmetrischen Wellenabschnitt (3) und einen Rotationskörper (4), der zum Aufschrumpfen auf den rotationssymmetrischen Wellenabschnitt (3) ausgebildet ist,
wobei zwischen dem Rotationskörper (4) und dem rotationssymmetrischen Wellenabschnitt (3) im Querschnitt entlang der Rotationsachse (5) gesehen eine erste Kontaktgerade (6) gebildet ist,
**dadurch gekennzeichnet, dass**
die erste Kontaktgerade (6) gegenüber der Rotationsachse (5) geneigt ist.

2. Anordnung (1) nach Anspruch 1,
wobei der Rotationskörper (4) als Kupplung ausgebildet und an einem Wellenende der Welle (2) angeordnet ist.

3. Anordnung (1) nach Anspruch 2,
wobei die erste Kontaktgerade (6) vom Wellenende (11) weg zur Rotationsachse (5) hin geneigt ist.

4. Anordnung (1) nach Anspruch 1, 2 oder 3,
wobei der Rotationskörper (4) an einem als Anschlag ausgebildeten Vorsprung (12) auf der Welle (2) angrenzt und der Anschlag (12) zur axialen Sicherung des Rotationskörpers (4) ausgebildet ist.

5. Anordnung (1) nach einem der vorhergehenden Ansprüche,
wobei zwischen der ersten Kontaktgeraden (6) und der Rotationsachse (5) ein Winkel α gebildet ist, der Werte zwischen 0° bis 20°, 5° bis 20°, 10° bis 20°, 15° bis 20°, 0° bis 15°, 0° bis 10°, 0° bis 5°, 5° bis 15° oder 0° bis 1° annimmt.

6. Anordnung (1) nach einem der vorhergehenden Ansprüche, wobei eine zweite Kontaktgerade (13) in axialer Richtung (10) gesehen hinter der ersten Kontaktgeraden (6) ausgebildet ist und unter einem Winkel β gegenüber der Rotationsachse (5) geneigt ist,
wobei die Pfeilung der ersten Kotaktgeraden (6) gegenüber der zweiten Kontaktgeraden (13) alterniert.

7. Anordnung (1) nach Anspruch 6,
wobei der Winkel β Werte zwischen 0° bis 20°, 5° bis 20°, 10° bis 20°, 15° bis 20°, 0° bis 15°, 0° bis 10°, 0° bis 5°, 5° bis 15° oder 0° bis 1° annimmt.

8. Anordnung (1) nach Anspruch 6 oder 7,
wobei der Winkel α mit dem Winkel β im Wesentlichen identisch ist.

9. Anordnung (1) nach Anspruch 6, 7 oder 8,
wobei die erste Kontaktgerade (6) direkt an der zweiten Kontaktgeraden (13) anschließt.

10. Anordnung (1) nach einem der vorhergehenden Ansprüche,
wobei die Welle (2) zur Anordnung (1) in einer Strömungsmaschine,
insbesondere Dampfturbine ausgebildet ist.

11. Verfahren zum Aufbringen eines Rotationskörpers (4) auf eine Welle (2),
wobei der Rotationskörper (4) erhitzt und auf die Welle (2) aufgeschrumpft wird,
wobei eine erste Berührungsfläche (8) zwischen dem Rotationskörper (4) und der Welle (2) gegenüber der Rotationsachse (5) geneigt ausgebildet wird.

12. Verfahren nach Anspruch 11,
wobei auf der Welle (2) ein Vorsprung (12) als Anschlag ausgebildet wird, mit dem ein Verrutschen des Rotationskörpers (4) in axialer Richtung (10) verhindert wird.

13. Verfahren nach Anspruch 11 oder 12,
wobei eine zweite Berührungsfläche (14) zwischen dem Rotationskörper (4) und der Welle (2) in axialer Richtung (10) dahinter ausgebildet wird,
wobei die zweite Berührungsfläche (14) gegenüber der ersten Berührungsfläche (8) alternierend gepfeilt und gegenüber der Rotationsachse (5) geneigt ausgebildet wird.
